# EUROPEAN PATENT SPECIFICATION

(11) **EP 2 539 546 B1**
(45) Date of publication and mention of the grant of the patent: **10.06.2015**
(21) Application number: 11703533.7
(22) Date of filing: 26.01.2011
(51) Int. Cl.: F01D 11/24, F01D 25/14, F01D 25/24

(54) **TURBINE SHROUD SUPPORT THERMAL SHIELD**
HITZESCHILD FÜR EINEN TURBINENDECKBANDTRÄGER
BOUCLIER THERMIQUE POUR SUPPORT D'ANNEAU DE TURBINE

(30) Priority: 25.02.2010 US 712639
(43) Date of publication of application: 02.01.2013
(73) Proprietor: General Electric Company, Schenectady, NY 12345 (US)
(72) Inventor: RULLI, Samuel, Ross, Gloucester MA 01930 (US); MENDES, Charles, Peabody MA 01960 (US); MANTEIGA, John, Alan, North Andover MA 01845 (US)
(74) Representative: Williams, Andrew Richard
(86) International application number: PCT/US2011/022504
(87) International publication number: WO 2011/106121

(56) References cited:
- EP-A1- 0 522 833
- US-A- 5 176 495
- US-A- 5 562 408

## Description

### BACKGROUND OF THE INVENTION

### TECHNICAL FIELD

The present invention relates generally to gas turbine engine high pressure turbine shrouds and support thereof.

### BACKGROUND INFORMATION

A conventional gas turbine engine typically includes a compressor, combustor and turbine. Both rotating turbine components such as blades, disks and retainers, and stationary turbine components such as vanes, shrouds and frames routinely require cooling due to heating thereof by hot combustion gases. Cooling of the turbine, especially the rotating components, is important to the proper function and safe operation of the engine. The high pressure turbine (HPT) stages typically maintain a very small tip clearance between turbine blade tips and shrouds surrounding the tips. Shroud supports maintain the shrouds in desired position relative to the rotating blade tips to control clearances between the shrouds and blades. The tip clearance should be made as small as possible for good efficiency, however, the tip clearance is typically sized larger than desirable for good efficiency because the blades and turbine shroud expand and contract at different rates during the various operating modes of the engine.

The turbine shroud has substantially less mass than that of the turbine blades and disk and therefore responds at a greater rate of expansion and contraction due to temperature differences experienced during operation. Since the turbines are bathed in hot combustion gases during operation, they are typically cooled using compressor discharge pressure and/or bleed air suitably channeled thereto.

In an aircraft gas turbine engine for example, acceleration burst of the engine during takeoff provides compressor discharge and/or bleed air which may be hotter than the metal temperature of the turbine shroud. Accordingly, the turbine shroud grows radially outwardly at a faster rate than that of the turbine blades which increases the tip clearance and, in turn, decreases engine efficiency. During a deceleration chop of the engine, the opposite occurs with the turbine shroud receiving compressor discharge and/or bleed air which is cooler than its metal temperature causing the turbine shroud to contract relatively quickly as compared to the turbine blades, which reduces the tip clearance and may cause rubs between the blade tip and the shroud. Accordingly, the tip clearance is typically sized to ensure a minimum tip clearance during deceleration, for example, for preventing or reducing the likelihood of undesirable rubbing of the blade tips against the turbine shrouds. This can damage and prematurely wear out the blade tip and the shroud which also decreases the engine efficiency.

The turbine shroud therefore directly affects overall efficiency or performance of the gas turbine engine due to the size of the tip clearance. The turbine shroud additionally affects performance of the engine since any compressor discharge and/or bleed air used for cooling the turbine shroud is therefore not used during the combustion process or the work expansion process by the turbine blades and is unavailable for producing useful work.

Accordingly, it is desirable to control the reduce the amount of bleed air used in cooling the turbine shroud for maximizing the overall efficiency of the engine.

In order to better control turbine blade tip clearances, some turbine shrouds and their supports are designed to grow and shrink in reacting to changes in compressor discharge pressure and/or bleed air during transient operating conditions such as acceleration bursts and deceleration chops as well as during cruise.

Cooling air used for cooling of the high pressure turbine (HPT) stages effects the operation of the shroud support in controlling the tip clearances between the shrouds and blades. A particular challenge for the HPT shroud support is to accommodate the blade transient response (time constant), such as during engine speed acceleration, while adding as little weight as possible.

It is important to prevent or minimize rubs between the blade tips and the shrouds during transients. It is desirable to minimize the effect of the turbine cooling on the transient response of the turbine shroud support during engine transients.

It is highly desirable to minimize effects on turbine shrouds and their supports due to growth and shrinkage because of changes in compressor discharge pressure and/or bleed air during transient operating conditions such as acceleration bursts and deceleration chops.

US 5,562,408 relates to a turbine shroud having features generally corresponding to the preamble of claim 1 herein. US 5,176,495 relates to a thermal shielding apparatus for a gas turbine engine and discloses use of an insulator box assembly filled with honeycombs, the box assembly located in a space between the casing of a nozzle guide vane segment and a low pressure turbine casing. EP 0,522,833 A1 relates to a heat shield for a compressor stator structure, with the heat shield located between a casing and a vane liner.

### BRIEF DESCRIPTION OF THE INVENTION

A gas turbine engine turbine shroud assembly is provided in accordance with claim 1 herein and includes an annular thermal shield circumferentially disposed around a radially outer surface of an annular shroud support. The thermal shield includes a honeycomb layer attached to the shroud support along a radially inner side of the honeycomb layer and a heat shield attached to the honeycomb layer along a radially outer side of the honeycomb layer. The honeycomb layer may be brazed to the shroud support and the heat shield may be brazed to the honeycomb layer.

A more particular embodiment of the gas turbine engine turbine shroud assembly includes a lip depending radially inwardly from a forward end of the heat shield and an axial extension extending axially beyond an aft end of the honeycomb layer. The thermal shield may be segmented.

Another particular embodiment of the gas turbine engine turbine shroud assembly includes at least axially spaced apart first and second stage thermal shields circumferentially disposed around a radially outer surface of an annular shroud support. The first and second stage thermal shields include first and second honeycomb layers attached to the shroud support along first and second radially inner sides of the first and second honeycomb layers respectively and the first and second stage thermal shields include first and second heat shields attached to the first and second honeycomb layers along first and second radially outer sides of the first and second honeycomb layers respectively. The first and second honeycomb layers may be brazed to the shroud support along first and second radially inner sides of the first and second honeycomb layers respectively and the first and second heat shields may be brazed to the first and second honeycomb layers along first and second radially outer sides of the first and second honeycomb layers respectively.

First and second lips may depend radially inwardly from first and second forward ends of the first and second heat shields. First and second axial extensions may extend axially beyond first and second aft ends of the first and second honeycomb layers respectively. The first lip may extend radially inwardly to axially cover a leading edge of the shroud support. The first and second stage thermal shields may be segmented.

A gas turbine engine high pressure turbine may incorporate the gas turbine engine turbine shroud assembly including at least axially spaced apart first and second stage thermal shields. First and second high pressure turbine stages of the high pressure turbine include first and second stage disks respectively and annular high pressure turbine first and second stage shroud assemblies radially spaced apart from and circumscribing first stage and second stage blades extending radially outwardly from the first and second stage disks respectively. First and second stage shrouds of the first and second stage shroud assemblies are coupled to first and second stage shroud hangers respectively and a shroud support include forward and aft hooks radially inwardly supporting the first and second stage shroud hangers. The first and second stage thermal shields are circumferentially disposed around a radially outer surface of the annular shroud support and generally concentric with the first and second stage shroud assemblies.

### BRIEF DESCRIPTION OF THE DRAWINGS

FIG. 1 is a sectional view illustration of a gas turbine engine having thermally isolating layers of honeycomb and metallic heat shields on first and second high pressure turbine shroud supports.
FIG. 2 is an enlarged sectional view illustration of a compressor discharge, combustor, and first and second high pressure turbines in the engine illustrated in FIG. 1.
FIG. 3 is an enlarged sectional view illustration of the first and second high pressure turbine shroud supports illustrated in FIG. 2.
FIG. 4 a perspective view illustration of a sector of the first and second high pressure turbine shroud supports illustrated in FIG. 3.

### DETAILED DESCRIPTION OF THE INVENTION

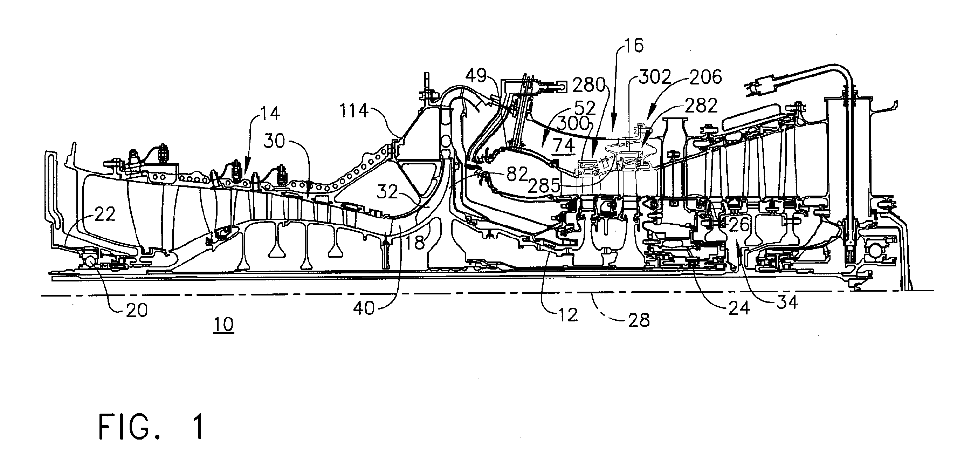

Illustrated in FIG. 1, gas turbine engine 10 having a high pressure rotor 12 including, in downstream flow relationship, a high pressure compressor 14, a combustor 52, a high pressure turbine 16, and low pressure turbine 34. The high pressure rotor 12 is rotatably supported about an engine centerline 28 by a forward bearing 20 in a front frame 22 and a rear bearing 24 disposed downstream of the high pressure turbine 16 in a turbine frame 26. The exemplary embodiment of the compressor 14 illustrated herein includes a five stage axial compressor 30 followed by a single stage centrifugal compressor 18 having an annular centrifugal compressor impeller 32.

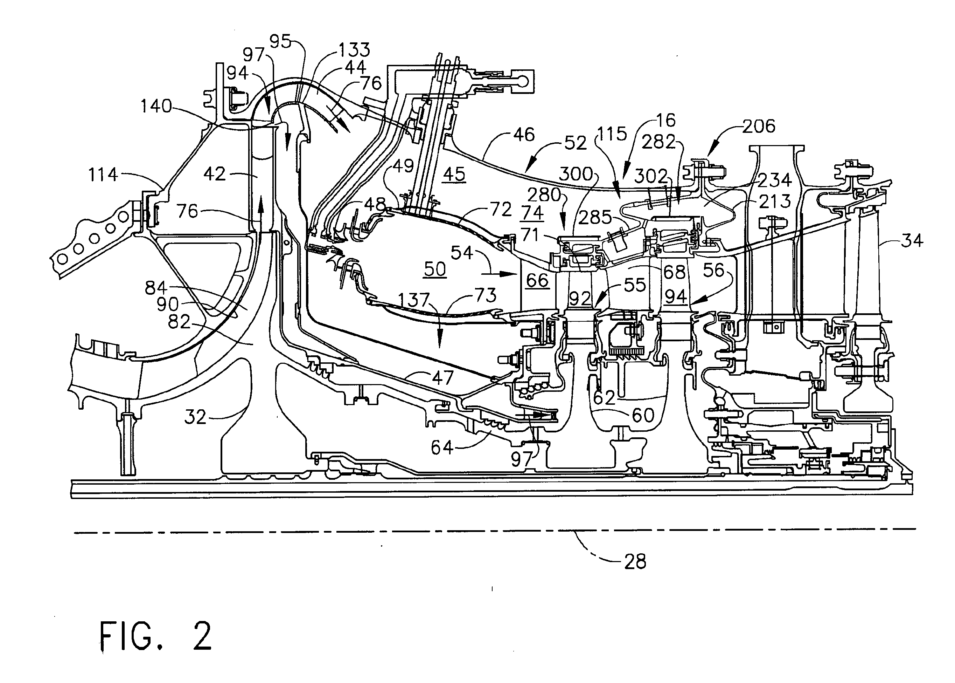

Further referring to FIG. 2, outlet guide vanes 40 are disposed between the five stage axial compressor 30 and the single stage centrifugal compressor 18. Compressor discharge pressure (CDP) air 76 exits the impeller 32 and passes through a diffuser 42 and then through a deswirl cascade 44 into a combustion chamber 45 within the combustor 52. The combustion chamber 45 is surrounded by annular radially outer and inner combustor casings 46, 47. Air 76 is conventionally mixed with fuel provided by a plurality of fuel nozzles 48 and ignited and combusted in an annular combustion zone 50 bounded by annular radially outer and inner combustion liners 72, 73.

The combustion produces hot combustion gases 54 which flow through the high pressure turbine 16 causing rotation of the high pressure rotor 12 and continue downstream for further work extraction in the low pressure turbine 34 and final exhaust as is conventionally known. In the exemplary embodiment depicted herein, the high pressure turbine 16 includes, in downstream serial flow relationship, first and second high pressure turbine stages 55, 56 having first and second stage disks 60, 62. A high pressure shaft 64 of the high pressure rotor 12 connects the high pressure turbine 16 in rotational driving engagement to the impeller 32. A first stage nozzle 66 is directly upstream of the first high pressure turbine stage 55 and a second stage nozzle 68 is directly upstream of the second high pressure turbine stage 56. An annular outer channel 74 disposed between the outer combustor casing 46 and the outer combustion liner 72 extends axially and downstream from an upstream or forward end 49 of the outer combustion liner 72 to at least the first high pressure turbine stage 55.

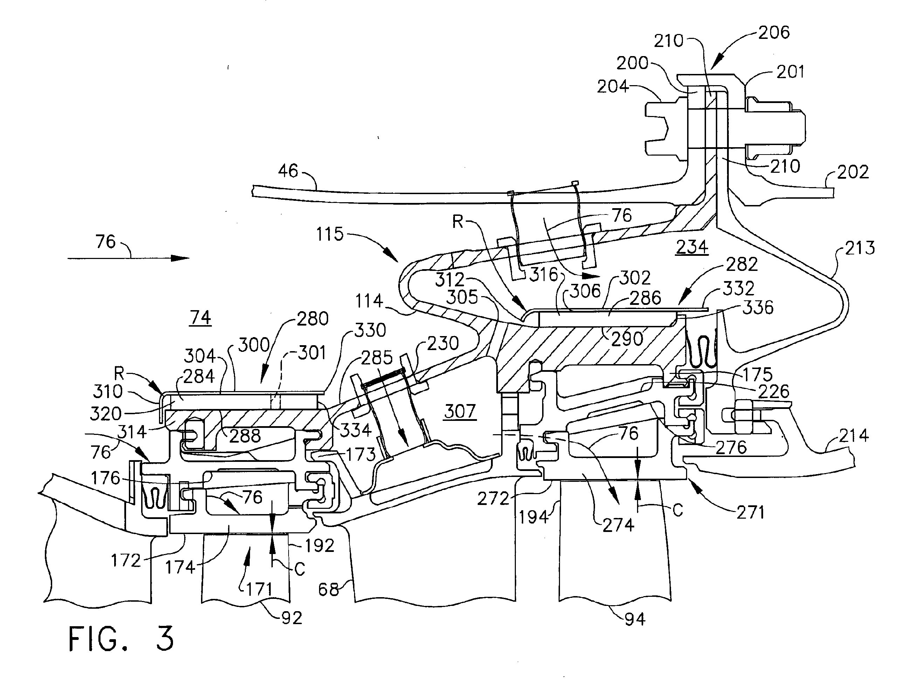

Referring to FIG. 3, an aft flange 200 of the outer combustor casing 46 is bolted to a forward flange 201 of a turbine casing 202 by bolts 204 at a bolted connection 206. The bolted connection also includes shroud support flange 210 supporting an annular shroud support 114 of a turbine shroud assembly 115 and a diffuser wall flange 212 of a diffuser support 213 supporting a radially outer inter-turbine diffuser wall 214 respectively. Annular high pressure turbine first and second stage shroud assemblies 171, 271 circumscribe first stage and second stage blades 92, 94 extending radially outwardly from the first and second stage disks 60, 62 in the first and second high pressure turbine stages 55, 56 respectively (see FIG. 2). The first and second stage shroud assemblies 171, 271 include first and second stage shrouds 172, 272 made up of a plurality of arcuate first and second stage shroud segments 174, 274 that are coupled to first and second stage shroud hangers 176, 276 respectively. The shroud support 114 includes forward and aft hooks 173, 175 radially inwardly supporting the first and second stage shroud hangers 176, 276 respectively.

Referring to FIG. 2, the compressor discharge pressure air, referred to herein as CDP air 76, is discharged from the impeller 32 of the centrifugal compressor 18 and used to combust fuel in the combustor 52 and to cool components of turbine 16 subjected to the hot combustion gases 54; namely, the first stage nozzle 66, a first stage shroud 71 and the first stage disk 60. The CDP air 76 is discharged from the impeller 32 of the centrifugal compressor 18 directly into the diffuser 42. The impeller 32 includes a plurality of centrifugal compressor blades 84 radially extending from rotor disc portion 82. Opposite and axially forward of the compressor blades 84 is an annular blade tip shroud 90.

A turbine cooling system 137 is used to cool high-pressure turbine (HPT) first stage blades 92 of the first stage disk 60 with clean cooling air 97 in order to minimize sand and/or dirt ingested into HPT blade cooling passages and, thus, prevent blocking of the small blade cooling passages and consequent blade failure. The clean cooling air 97 is bled at a bleed location 95 downstream of an outlet 140 of the diffuser 42 as the CDP air 76 enters the deswirl cascade 44 along an internal radius portion 133 thereof. The clean cooling air 97 bled in this manner is substantially free of particulate matter which could clog fine cooling passages in the first stage blades 92 of the first stage disk 60.

Referring to FIG. 3, the CDP air 76 from the annular outer channel 74 is bled or drawn into the second stage nozzle 68 through a second stage nozzle inlet 230 (also referred to as a spoolie) to cool the second stage nozzle 68. The CDP air 76 from the annular outer channel 74 is also channeled to the first stage shroud 172 for cooling thereof. The clean cooling air 97 bled at the bleed location 95 downstream of an outlet 140 of the diffuser 42 is piped to an annular first cavity 234 located radially outwardly of the second stage shroud assembly 271. The CDP air 76 in the first cavity 234 cools the aft shroud hanger 226 and then is flowed through a first set of holes 305 into and used to purge an annular second cavity 307 located radially between the second stage nozzle 68 and the shroud support 114. The CDP air 76 in the second cavity 237 is then flowed through the second stage shroud 272 to cool the second stage shroud 272.

The first and second stage shroud assemblies 171, 271 are designed to maintain minimal tip clearances C between first stage and second stage blade tips 192, 194 of the first stage and second stage blades 92, 94 and the first and second stage shrouds 172, 272. The first and second stage shroud assemblies 171, 271 and their components are cooled by the CDP air 76 and supported by the shroud support 114 which is exposed to the CDP air 76.

The first and second stage shroud assemblies 171, 271 thermally expand and contract at relatively faster rates than that of the relatively slower responding, higher mass first stage and second stage blades 92, 94 and first and second stage disks 60, 62 illustrated in FIG. 2. Accordingly, the tip clearances C vary in size during transient engine transient operating conditions such as acceleration bursts and deceleration chops. Typically, the tip clearances C are designed to be a little greater than would otherwise be desired to accommodate the varying tip clearances C during transient engine transient operating conditions which decreases engine efficiency particularly during cruise.

Referring to FIG. 3, axially spaced apart first and second stage thermal shields 280, 282 are circumferentially disposed around a radially outer surface 285 of the shroud support 114 and preferably concentric with the first and second stage shroud assemblies 171, 271 and first and second stage shrouds 172, 272. The first and second stage thermal shields 280, 282 include first and second honeycomb layers 284, 286 attached to the shroud support 114 and first and second heat shields 300, 302 are attached to the first and second honeycomb layers 284, 286. First and second radially inner sides 288, 290 of the first and second honeycomb layers 284, 286 respectively are preferably brazed to the shroud support 114. The first and second heat shields 300, 302 are preferably brazed to first and second radially outer sides 304, 306 of the first and second honeycomb layers 284, 286 respectively.

Otherwise, open cells 301 of the first and second honeycomb layers 284, 286 are sealed by the first and second heat shields 300, 302 and thus reduce radiant and convective heat transfer between the surrounding CDP air 76 and the shroud support 114. The first and second heat shields 300, 302 also reduce radiant and convective heat transfer between the surrounding CDP air 76 and the shroud support 114 because they prevent slowing of the flow of CDP air 76 over the honeycomb layers thus reducing time of contact and time for heat transfer to occur.

First and second lips 310, 312 on first and second forward ends 314, 316 of the first and second heat shields 300, 302 respectively also reduce heat transfer between the surrounding CDP air 76 and the shroud support 114 by reducing slowing down of the flow of CDP air 76 over the honeycomb layers and further protecting contact between the honeycomb layers and shroud support 114 and the flow of CDP air 76. The first and second lips 310, 312 depend radially inwardly from the first and second forward ends 314, 316 of the first and second heat shields 300, 302 respectively and include radii R of curvature. The first and second lips 310, 312 depend radially inwardly to substantially axially cover the first and second honeycomb layers 284, 286. The first lip 310 extends radially inwardly to axially cover a leading edge 320 of the shroud support 114.

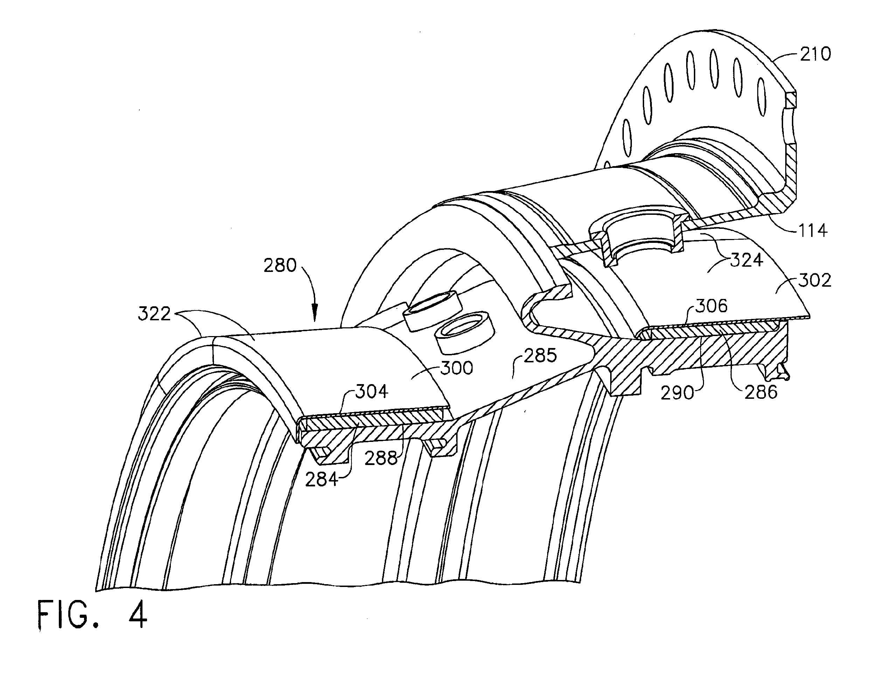

First and second axial extensions 330, 332 extending axially beyond first and second aft ends 334, 336 of the first and second honeycomb layers 284, 286 respectively also reduce heat transfer between the surrounding CDP air 76 and the shroud support 114 by guiding the flow of CDP air 76 aftwardly away from the honeycomb layers and further preventing contact between the shroud support 114 and the flow of CDP air 76 in the area of shrouds. As illustrated in FIG. 4, the first and second stage thermal shields 280, 282 are segmented into circumferential pluralities of first and second thermal shield segments 322, 324. The thermal shields and annular shroud support may be used for more than two turbine stages.

The first and second stage thermal shields 280, 282 help match the blade and disk transient response to that of the shroud support while adding very little weight to the turbine. The heat shields are brazed to the honeycomb layer and then cut into annular segments or sectors illustrated as the thermal shield segments. The thermal shield segments are brazed onto the HPT shroud support 114. The air in the honeycomb cells of the honeycomb layers act as insulators, therefore the part can be lower in weight and have the proper clearance time constant.

One exemplary heat shield material is 0.508 mm (.020 inches) thick and is brazed to thicker honeycomb material about 2.54 mm (.100 inches) thick. The thermal shield is at a HPT shroud support diameter and the thermal shield segments may be a 20 or 24 degree sector. The correct number of thermal shield segments are brazed onto the shroud support to cover it 360 degrees for both first and second turbine stages. The thermal shield is brazed on in sectors or segments because of a coefficient of expansion difference between the heat shield and HPT shroud support material. HPT shroud supports are typically made from low coefficient of expansion alloys and because of cost and availability heat shields are not made from low coefficient of expansion alloys. If the heat shields were not in sectors then they might not withstand the stress caused from the low coefficient of expansion difference and temperature difference during transients.

While there have been described herein what are considered to be preferred and exemplary embodiments of the present invention, other modifications of the invention shall be apparent to those skilled in the art from the teachings herein and, it is therefore, desired to be secured in the appended claims all such modifications as fall within the scope of the invention.

## Claims

1. A gas turbine engine turbine shroud assembly (115) comprising:
an annular thermal shield (280, 282) circumferentially disposed around a radially outer surface (285) of an annular shroud support (114),
the thermal shield (280, 282) including a honeycomb layer (284, 286) attached to the shroud support (114) along a radially inner side (288, 290) of the honeycomb layer (284, 286),
**characterized in that**:
the thermal shield (280, 282) includes a heat shield (302, 304) attached to the honeycomb layer (284, 286) along a radially outer side (304, 306) of the honeycomb layer (284, 286).

2. A gas turbine engine turbine shroud assembly (115) as claimed in Claim 1, further comprising the honeycomb layer (284, 286) being brazed to the shroud support (114) and the heat shield (300, 302) being brazed to the honeycomb layer (284, 286).

3. A gas turbine engine turbine shroud assembly (115) as claimed in Claim 1, further comprising a lip (310, 312) depending radially inwardly from a forward end (314, 316) of the heat shield (300, 302).

4. A gas turbine engine turbine shroud assembly (115) as claimed in Claim 3, further comprising an axial extension (330, 332) extending axially beyond an aft end (334, 336) of the honeycomb layer (284, 286).

5. A gas turbine engine turbine shroud assembly (115) as claimed in Claim 4, further comprising the honeycomb layer (284, 286) being brazed to the shroud support (114) and the heat shield (300, 302) being brazed to the honeycomb layer (284, 286).

6. A gas turbine engine turbine shroud assembly (115) as claimed in Claim 5, further comprising the thermal shield (280, 282) being segmented.

7. A gas turbine engine turbine shroud assembly (115) as claimed in claim 1, wherein the annular thermal shield comprises at least axially spaced apart first and second stage thermal shields (280, 282) circumferentially disposed around the radially outer surface (285) of the annular shroud support (114),
the first and second stage thermal shields (280, 282) including first and second honeycomb layers (284, 286) attached to the shroud support (114) along first and second radially inner sides (288, 290) of the first and second honeycomb layers (284, 286) respectively, and
the first and second stage thermal shields (280, 282) including first and second heat shields (300, 302) attached to the first and second honeycomb layers (284, 286) along first and second radially outer sides (304, 306) of the first and second honeycomb layers (284, 286) respectively.

8. A gas turbine engine turbine shroud assembly (115) as claimed in Claim 7, further comprising the first and second honeycomb layers (284, 286) brazed to the shroud support (114) along first and second radially inner sides (288, 290) of the first and second honeycomb layers (284, 286) respectively, and the first and second heat shields (300, 302) brazed to the first and second honeycomb layers along first and second radially outer sides (304, 306) of the first and second honeycomb layers (284, 286) respectively.

9. A gas turbine engine turbine shroud assembly (115) as claimed in Claim 7, further comprising:
first and second lips (310, 312) depending radially inwardly from first and second forward ends (314, 316) of the first and second heat shields (300, 302),
first and second axial extensions (330, 332) extending axially beyond first and second aft ends (334, 336) of the first and second honeycomb layers (284, 286) respectively,
the first lip (310) extending radially inwardly to axially cover a leading edge (320) of the shroud support (114), and
the first and second stage thermal shields (280, 282) being segmented.

10. A gas turbine engine high pressure turbine (16) comprising:
first and second high pressure turbine stages (55,56) having first and second stage disks (60,62) respectively, annular high pressure turbine first and second stage shroud assemblies (171,271) radially spaced apart from and circumscribing first stage and second stage blades (92,94) extending radially outwardly from the first and second stage disks (60,62) respectively,
the first and second stage shroud assemblies (171, 271) being in accordance with claim 7 and including first and second stage shrouds (172, 272) coupled to first and second stage shroud hangers (176, 276) respectively,
the shroud support (114) including forward and aft hooks (173, 175) radially inwardly supporting the first and second stage shroud hangers (176, 276).

## Patentansprüche

1. Gasturbinenmotor-Turbinenmantelbaugruppe (115), Folgendes umfassend:
einen ringförmigen Hitzeschild (280, 282), umlaufend angeordnet um eine radial angeordnete Außenfläche (285) eines ringförmigen Mantelträgers (114),
wobei der Hitzeschild (280, 282) eine Wabenschicht (284, 286) aufweist, die entlang einer radial angeordneten Innenseite (288, 290) der Wabenschicht (284, 286) an dem Mantelträger (114) befestigt ist,
**dadurch gekennzeichnet, dass**:
der Hitzeschild (280, 282) einen Hitzeschutz (302, 304) umfasst, der entlang einer radial angeordneten Außenseite (304, 306) der Wabenschicht (284, 286) an der Wabenschicht (284, 286) befestigt ist.

2. Gasturbinenmotor-Turbinenmantelbaugruppe (115) nach Anspruch 1, ferner umfassend, dass die Wabenschicht (284, 286) am Mantelträger (114) angelötet ist und dass der Hitzeschutz (300, 302) an der Wabenschicht (284, 286) angelötet ist.

3. Gasturbinenmotor-Turbinenmantelbaugruppe (115) nach Anspruch 1, ferner umfassend eine Lippe (310, 312), die von einem nach vorn weisenden Ende (314, 316) des Hitzeschutzes (300, 302) radial nach innen hängt.

4. Gasturbinenmotor-Turbinenmantelbaugruppe (115) nach Anspruch 3, ferner umfassend eine axiale Verlängerung (330, 332), die sich axial über ein hinteres Ende (334, 336) der Wabenschicht (284, 286) hinaus erstreckt.

5. Gasturbinenmotor-Turbinenmantelbaugruppe (115) nach Anspruch 4, ferner umfassend, dass die Wabenschicht (284, 286) am Mantelträger (114) angelötet ist und dass der Hitzeschutz (300, 302) an der Wabenschicht (284, 286) angelötet ist.

6. Gasturbinenmotor-Turbinenmantelbaugruppe (115) nach Anspruch 5, ferner umfassend, dass der Hitzeschild (280, 282) segmentiert ist.

7. Gasturbinenmotor-Turbinenmantelbaugruppe (115) nach Anspruch 1, wobei der ringförmige Hitzeschild wenigstens axial voneinander beabstandete Hitzeschilde (280, 282) für die erste und die zweite Stufe umfasst, die umlaufend um die radial angeordnete Außenfläche (285) des ringförmigen Mantelhalters (114) angeordnet sind,
Hitzeschilde (280, 282) für die erste und die zweite Stufe, umfassend eine erste und eine zweite Wabenschicht (284, 286), die am Mantelträger (114) entlang einer ersten und einer zweiten radial angeordneten Innenseite (288, 290) der ersten beziehungsweise der zweiten Wabenschicht (284, 286) festigt sind, und
Hitzeschilde (280, 282) für die erste und die zweite Stufe, umfassend ersten und zweiten Hitzeschutz (300, 302), der an der ersten und der zweiten Wabenschicht (284, 286) entlang einer ersten und einer zweiten radial angeordneten Außenseite (304, 306) der ersten beziehungsweise der zweiten Wabenschicht (284, 286) befestigt ist.

8. Gasturbinenmotor-Turbinenmantelbaugruppe (115) nach Anspruch 7, ferner umfassend, dass die erste und die zweite Wabenschicht (284, 286) entlang einer ersten und einer zweiten radial angeordneten Innenseite (288, 290) der ersten beziehungsweise der zweiten Wabenschicht (284, 286) am Mantelträger (114) angelötet sind und der erste und der zweite Hitzeschutz (300, 302) entlang einer ersten und einer zweiten radial angeordneten Außenseite (304, 306) der ersten beziehungsweise der zweiten Wabenschicht (284, 286) an der ersten beziehungsweise der zweiten Wabenschicht (284, 286) angelötet sind.

9. Gasturbinenmotor-Turbinenmantelbaugruppe (115) nach Anspruch 7, ferner umfassend:
eine erste und eine zweite Lippe (310, 312), die von einem ersten und einem zweiten vorderen Ende (314, 316) des ersten und des zweiten Hitzeschutzes (300, 302) radial nach innen hängt,
wobei sich die erste und die zweite axiale Verlängerung (330, 332) axial über das erste und das zweite hintere Ende (334, 336) der ersten beziehungsweise der zweiten Wabenschicht (284, 286) verlängert,
wobei sich die erste Lippe (310) radial nach innen erstreckt, um eine Führungskante (320) des Mantelträgers (114) axial abzudecken, und
wobei die Hitzeschilde (280, 282) der ersten und der zweiten Stufe segmentiert sind.

10. Gasturbinenmotor-Hochdruckturbine (16), Folgendes umfassend:
erste und zweite Hochdruck-Turbinenstufen (55, 56) mit Scheiben (60, 62) für die erste beziehungsweise die zweite Stufe, ringförmige Hochdruck-Turbinenmantelbaugruppen (171, 271) für die erste und die zweite Stufe, radial voneinander beabstandet und die Schaufelblätter (92, 94) für die erste und die zweite Stufe abgrenzend, die sich von den Scheiben (60, 62) für die erste beziehungsweise die zweite Stufe radial nach außen erstrecken,
wobei die Mantelbaugruppen (171, 271) für die erste und die zweite Stufe dem Anspruch 7 entsprechen und Mäntel (172, 272) für die erste und die zweite Stufe umfassen, die mit der Mantelaufhängung (176, 276) für die erste beziehungsweise die zweite Stufe verknüpft sind,
wobei der Mantelträger (114) nach vorn und nach hinten weisende Haken (173, 175) aufweist, welche die Mantelaufhängungen (176, 276) für die die erste und die zweite Stufe radial nach innen stützen.

## Revendications

1. Ensemble de carénage de turbine (115) de moteur à turbine à gaz, comprenant :
un bouclier thermique annulaire (280, 282) disposé sur la périphérie autour d'une surface radialement externe (285) d'un support de carénage annulaire (114),
le bouclier thermique (280, 282) comprenant une couche en nid d'abeilles (284, 286) fixée au support de carénage (114) le long d'un côté radialement interne (288, 290) de la couche en nid d'abeilles (284, 286),
**caractérisé en ce que** :
le bouclier thermique (280, 282) comprend un écran de chaleur (302, 304) fixé à la couche en nid d'abeilles (284, 286) le long d'un côté radialement externe (304, 306) de la couche en nid d'abeilles (284, 286).

2. Ensemble de carénage de turbine (115) pour moteur à turbine à gaz selon la revendication 1, comprenant en outre la couche en nid d'abeilles (284, 286) qui est brasée au support de carénage (114) et l'écran de chaleur (300, 302) qui est brasé à la couche en nid d'abeilles (284, 286).

3. Ensemble de carénage de turbine (115) pour moteur à turbine à gaz selon la revendication 1, comprenant en outre une lèvre (310, 312) pendant radialement vers l'intérieur d'une extrémité avant (314, 316) de l'écran de chaleur (300, 302).

4. Ensemble de carénage de turbine (115) pour moteur à turbine à gaz selon la revendication 3, comprenant en outre une extension axiale (330, 332) s'étendant axialement au-delà d'une extrémité arrière (334, 336) de la couche en nid d'abeilles (284, 286).

5. Ensemble de carénage de turbine (115) pour moteur à turbine à gaz selon la revendication 4, comprenant en outre la couche en nid d'abeilles (284, 286) qui est brasée au support de carénage (114) et l'écran de chaleur (300, 302) qui est brasé à la couche en nid d'abeilles (284, 286).

6. Ensemble de carénage de turbine (115) pour moteur à turbine à gaz selon la revendication 5, comprenant en outre le bouclier thermique (280, 282) qui est segmenté.

7. Ensemble de carénage de turbine (115) pour moteur à turbine à gaz selon la revendication 1, dans lequel le bouclier thermique annulaire comprend des boucliers thermiques de premier et second étages (280, 282) au moins axialement espacés l'un de l'autre et disposés sur la circonférence autour de la surface radialement externe (285) du support de carénage annulaire (114),
les boucliers thermiques de premier et second étages (280, 282) comprenant une première et une seconde couche en nid d'abeilles (284, 286) fixées au support de carénage (114) le long de premiers et seconds côtés radialement internes (288, 290) de la première et de la seconde couche en nid d'abeilles (284, 286), respectivement, et
les boucliers thermiques de premier et second étage (280, 282) comprenant un premier et un second écran de chaleur (300, 302) fixés à la première et à la seconde couche en nid d'abeilles (284, 286) le long de premiers et seconds côtés radialement externes (304, 306) de la première et de la seconde couche en nid d'abeilles (284, 286), respectivement.

8. Ensemble de carénage de turbine (115) pour moteur à turbine à gaz selon la revendication 7, comprenant en outre la première et la seconde couche en nid d'abeilles (284, 286) qui sont brasées au support de carénage (114) le long des premiers et seconds côtés radialement internes (288, 290) de la première et de la seconde couche en nid d'abeilles (284, 286), respectivement, et le premier et le second écran de chaleur (300, 302) qui sont brasés à la première et à la seconde couche en nid d'abeilles le long des premiers et seconds côtés radialement externes (304, 306) de la première et de la seconde couche en nid d'abeilles (284, 286), respectivement.

9. Ensemble de carénage de turbine (115) pour moteur à turbine à gaz selon la revendication 7, comprenant en outre :
une première et une seconde lèvre (310, 312) pendant radialement vers l'intérieur d'une première et d'une seconde extrémité avant (314, 316) des premier et second écrans de chaleur (300, 302),
une première et une seconde extension axiale (330, 332) s'étendant axialement au-delà des première et seconde extrémités arrière (334, 336) de la première et de la seconde couche en nid d'abeilles (284, 286), respectivement,
la première lèvre (310) s'étendant radialement vers l'intérieur pour couvrir axialement un bord d'attaque (320) du support de carénage (114), et
les boucliers thermiques (280, 282) des premier et second étages étant segmentés.

10. Turbine à pression élevée (16) pour moteur à turbine à gaz, comprenant :
un premier et un second étage de turbine sous pression élevée (55, 56) ayant des disques de premier et second étage (60, 62), respectivement, des ensembles annulaires de carénage de premier et second étage de la turbine sous pression élevée (171, 271) qui sont espacés radialement l'un de l'autre et circonscrivent des aubes de premier et second étages (92, 94) qui s'étendent radialement vers l'extérieur des disques de premier et second étages (60, 62), respectivement,
les ensembles de carénage de premier et second étages (171, 271) étant conformes à la revendication 7 et comprenant des carénages de premier et second étages (172, 272) couplés à des suspensions de carénages de premier et second étages (176, 276), respectivement,
le support de carénage (114) comprenant des crochets avant et arrière (173, 175) supportant radialement vers l'intérieur les suspensions de carénages de premier et second étages (176, 276).
